# FASCICULE DE BREVET EUROPEEN

(11) **EP 0 912 354 B1**
(45) Date de publication et mention de la délivrance du brevet: **05.12.2001**
(21) Numéro de dépôt: 97929263.8
(22) Date de dépôt: 23.06.1997
(51) Int. Cl.: B60C 5/00, B60C 5/04, B60C 17/06

(54) **STRUCTURE GONFLABLE POUR PNEUMATIQUE**
AUFBLASBARE STRUKTUR FÜR LUFTREIFEN
INFLATABLE STRUCTURE FOR A TYRE

(30) Priorité: 25.06.1996 FR 9608044
(43) Date de publication de la demande: 06.05.1999
(73) Titulaire: COMPAGNIE GENERALE DES ETABLISSEMENTS MICHELIN-MICHELIN & CIE, F-63040 Clermont-Ferrand Cédex 01 (FR)
(72) Inventeur: SIGNORET, Christian, F-63800 Cournon-d'Auvergne (FR)
(74) Mandataire: Devaux, Edmond-Yves
(86) Numéro de dépôt international: EP9703282
(87) Numéro de publication internationale: WO9749566

(56) Documents cités:
- FR-A- 738 804
- FR-A- 2 013 313
- GB-A- 996 404
- NL-C- 50 784

## Description

L'invention concerne une structure gonflable destinée à être disposée à l'intérieur d'un pneumatique et plus particulièrement une structure gonflable en matériau à base de caoutchouc cellulaire.

On connaît aujourd'hui deux types de pneumatiques : les pneumatiques sans chambre à air dans lesquels la pression de l'air de gonflage agit directement sur la paroi interne du pneumatique et les pneumatiques avec chambre à air dans lesquels la pression de gonflage agit par l'intermédiaire d'une chambre à air. L'un des problèmes majeurs des pneumatiques demeure les conséquences liées à une perte de pression de gonflage, par exemple, par crevaison. Pour éliminer les inconvénients liés à une telle perte de pression de gonflage dans un pneumatique, il est connu d'introduire dans l'espace situé entre ledit pneumatique et la jante sur laquelle il est monté, une structure réalisée en mousse cellulaire.

Une première possibilité consiste à introduire dans le pneumatique une structure non gonflable réalisée en mousse cellulaire qui occupe en totalité le volume intérieur délimité par la paroi interne du pneumatique et la jante sur laquelle il est monté dans des conditions de roulage sans pression. Lorsque le pneumatique est gonflé, cette structure en mousse se comprime et occupe seulement une partie du volume intérieur du pneumatique (voir, par exemple, le brevet français 1 322 887); si la pression de gonflage vient à disparaître, la structure en mousse se détend et remplit complètement le volume intérieur du pneumatique.

Cette disposition, bien que relativement efficace pour de courts trajets à pression de gonflage nulle, ne permet pas de réaliser des longs trajets à des vitesses élevées en raison de l'échauffement intense qui se produit dans la structure résultant des sollicitations cycliques subies par le pneumatique à chaque tour de roue. En outre, si l'on veut diminuer les sollicitations dans la structure il faut limiter la flèche d'écrasement du pneumatique en augmentant la pression exercée par ladite structure sur la paroi interne du pneumatique; cela peut obliger à réaliser une structure surdimensionnée par rapport aux dimensions du pneumatique - c'est à dire, à adopter pour la structure à l'état libre hors du pneumatique des dimensions très supérieures aux dimensions du pneumatique - ce qui se traduit par d'importantes difficultés de montage de la structure cellulaire dans le pneumatique et par la formation de plis à la surface extérieure de la structure pouvant conduire à l'initiation de cassures en cours d'utilisation.

Un autre problème rencontré avec ces structures non gonflables est lié à l'aspect évolutif avec le temps des propriétés du matériau composant lesdites structures qui peut conduire à une perte sensible des performances d'un pneumatique équipé d'une telle structure, compte tenu de la réduction significative d'élasticité de déformation desdites structures; pour atténuer voire éviter une telle modification, il est souvent nécessaire d'adopter des mesures adaptées et coûteuses pour stocker les structures non gonflables avant utilisation dans un pneumatique.

Un autre dispositif connu et permettant d'assurer le roulage d'un pneumatique à pression nulle consiste à entourer une chambre à air avec un corps plus ou moins épais en matériau cellulaire à cellules ouvertes ou fermées. Il faut noter que la réalisation de ce dispositif nécessite plusieurs opérations de fabrication et d'assemblage qui représentent un coût important limitant son développement industriel. Par exemple, le brevet français FR 2013313 propose de remplacer une chambre à air annulaire dont la paroi est en caoutchouc par une chambre à air annulaire interne entourée d'une autre chambre annulaire externe d'épaisseur relativement plus importante que celle de la chambre interne, la chambre externe étant réalisée dans un matériau élastique cellulaire comportant un grand nombre de cellules fermées.

En outre, il est connu de réaliser une chambre à air ayant une paroi épaisse réalisée dans une matière élastique cellulaire à cellules ouvertes ou fermées de façon à obtenir les conditions de souplesse désirées par gonflage et préservant ladite chambre des inconvénients résultant des perforations (voir par exemple le brevet français FR 369680). Cette chambre présente, non gonflée, une cavité interne qui occupe un volume important comparativement au volume total de la paroi de ladite chambre. Il en résulte que lors d'une perforation de la chambre ou plus généralement lors d'une perte de pression, cette chambre ne va jouer pleinement son rôle de support interne au pneumatique qu'à partir du moment où la flèche d'écrasement dudit pneumatique aura provoqué l'affaissement total de la cavité interne, de façon à pouvoir solliciter en compression le matériau constituant la chambre. De ce fait, la chambre ne peut empêcher le pneumatique de subir une flèche d'écrasement supplémentaire qui peut nuire à l'endurance dudit pneumatique.

On connaît aussi des structures en matériau spongieux, c'est à dire formé d'une pluralité de cellules ouvertes, comportant une cavité annulaire reliée à un dispositif de gonflage permettant de gonfler chacune desdites cellules (voir par exemple le brevet français FR 2 013 313, correspondant au préambule de la revendication 1). En cas de perforation, toutes les cellules ouvertes formant cette structure se dégonflent progressivement et en conséquence ladite structure ne peut assurer un soutien suffisant de la charge supportée par le pneumatique équipé avec ladite structure qu'en adoptant une flèche d'écrasement supplémentaire pouvant nuire à l'endurance du pneumatique.

A l'opposé, on connaît des chambres à air dont les parois épaisses délimitent une cavité interne de section sensiblement circulaire et occupant un petit volume à l'état non gonflé. Le problème qui se pose, ici, est celui de la résistance mécanique du matériau cellulaire, en particulier au voisinage de ladite cavité. En effet, et dès lors que cette cavité est sous pression, sa section transversale a tendance à augmenter de façon très importante, ce qui se traduit par une déformation très grande voire excessive du matériau de la chambre au voisinage de la cavité pouvant conduire à un endommagement par fatigue dudit matériau.

L'invention a pour objectif de proposer une structure gonflable destinée à être placée à l'intérieur d'un pneumatique pour supporter ledit pneumatique même à pression de gonflage nulle et ne présentant pas les inconvénients des structures qui viennent d'être décrites.

Un autre objectif est de proposer une structure gonflable permettant le gonflage d'un pneumatique à la pression adéquate pour le bon fonctionnement dudit pneumatique, qu'il soit de type "sans chambre" ou de type "avec chambre", et permettant avec une bonne sécurité d'assurer un excellent fonctionnement dudit pneumatique à faible pression de gonflage voire à pression de gonflage nulle.

La présente invention concerne une structure gonflable destinée à occuper sensiblement tout le volume intérieur d'un pneumatique monté sur une jante de montage lorsque ladite structure n'est pas gonflée. Cette structure, dont une de ses dimensions est très supérieure à ses autres dimensions, est réalisée dans un matériau à base de caoutchouc comportant une pluralité de cellules fermées, et est pourvue d'au moins une cavité interne qui s'étend sur au moins 90% de la longueur de la plus grande des dimensions de ladite structure. Cette cavité interne est prévue pour être remplie avec un fluide sous pression de façon à gonfler la structure gonflable. Des moyens sont prévus pour permettre l'introduction d'un fluide sous pression dans la cavité interne.

La structure gonflable selon l'invention est caractérisée en ce que, à l'état non gonflé, le périmètre moyen de la section transversale de chaque cavité est au moins égal à 10% du périmètre moyen de la section transversale de la structure et en ce que la surface moyenne de la section transversale de la cavité est petite devant la section transversale totale de la structure. De manière préférentielle, par petite, on entend que la surface moyenne de la section transversale de la cavité, dans la structure gonflable non gonflée, est inférieure à 10% de la surface moyenne de la section transversale totale de ladite structure.

Par périmètre moyen ou surface moyenne, il faut comprendre la moyenne des périmètres ou des surfaces évaluée pour plusieurs sections transversales régulièrement réparties le long de la plus grande des dimensions de la structure gonflable.

La structure gonflable, objet de la présente invention, présente l'avantage que chaque cavité est presque refermée en totalité dès que ladite structure non gonflée est en place à l'intérieur d'un pneumatique lui-même monté sur sa jante et ainsi cette structure remplit son rôle de support à pression nulle sans qu'il y ait guère de flèche supplémentaire résultant de l'écrasement de la cavité.

L'utilisation de cette structure gonflable permet de faire travailler le pneumatique dans un état gonflé habituel, en introduisant, par exemple, de l'air sous pression dans chaque cavité interne, par exemple, au moyen d'une valve préalablement fixée à ladite structure et elle-même reliée à une cavité intérieure. Sous l'action de cette pression d'air, le matériau constituant la structure gonflable va être comprimé contre la paroi intérieure du pneumatique; dans un premier temps, la forme et la surface moyenne de la section transversale de chaque cavité évolue davantage avec la pression que n'évolue le périmètre moyen de ladite cavité.

Il est ainsi possible de retrouver le fonctionnement habituel d'un pneumatique soumis à une pression interne tout en ajustant la valeur de cette pression en fonction de l'utilisation prévisible du pneumatique; ainsi un roulage sur un terrain meuble, c'est à dire ne présentant pas une rigidité de cisaillement importante, est amélioré en gonflant très faiblement voire en ne gonflant pas du tout le pneumatique, lequel reste, cependant, bien maintenu sur sa jante par la présence de la structure gonflable peu ou pas gonflée.

Dans l'éventualité d'une perte de pression dans une des cavités de la structure gonflable, ladite structure en matériau caoutchoutique cellulaire a tendance à reprendre sa forme initiale non gonflée, par fermeture de ladite cavité interne, et à occuper à nouveau la totalité du volume à l'intérieur du pneumatique.

Pour obtenir un fonctionnement homogène de la structure gonflable lorsqu'elle est placée dans un pneumatique et qu'elle est soumise à une pression de gonflage, il est préférable que chaque cavité soit positionnée de telle sorte que la distance minimale d'un point quelconque sur le contour de ladite cavité, à l'exception des points de la cavité au voisinage du moyen permettant le gonflage, par rapport au point le plus proche situé sur l'extérieur de la structure gonflable est au moins égale à 15% de la plus grande des dimensions de la section transversale moyenne de la structure. De cette façon, il est possible de réduire significativement les risques d'endommagement de la structure gonflable dans la ou les régions où la cavité est la plus proche de la surface extérieure de ladite structure.

L'état libre de la structure gonflable correspond à l'état dans lequel elle se trouve avant sa première utilisation, hors d'un pneumatique et non gonflée.

Les figures jointes au présent exposé et représentant deux modes de réalisation, qui ne sauraient être considérés comme limitatifs, sont destinées à faire mieux comprendre l'invention.

La figure 1 représente une coupe transversale d'une structure annulaire gonflable selon l'invention.

La figure 2 montre la même structure annulaire gonflable placée dans un pneumatique monté sur une jante, la structure n'étant pas gonflée.

La figure 3 correspond à la structure annulaire représentée sur la figure 2 dans laquelle un fluide sous pression a été introduit pour gonfler ladite structure.

La figure 4 montre une variante d'une structure gonflable selon l'invention qui se présente sous une forme allongée ayant deux extrémités fermées.

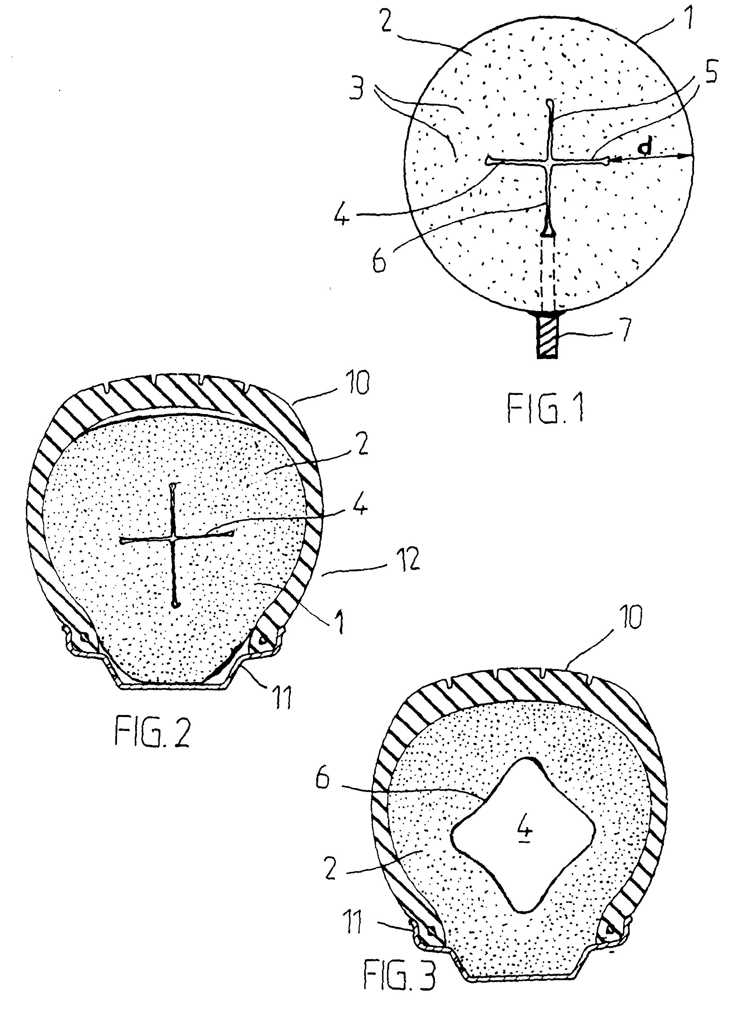

Sur la figure 1 est représentée une section transversale d'une structure gonflable 1 destinée à être introduite dans un pneumatique au moment du montage de ce dernier sur une jante de montage, de façon à obtenir un ensemble tel que montré en coupe transversale sur la figure 2. La structure gonflable 1 a la forme d'un tore fermé dont une section transversale circulaire de rayon 35mm est représentée sur la figure 1. Cette structure 1 est réalisée dans un matériau à base de caoutchouc cellulaire 2 comportant de nombreuses cellules 3 fermées et sous pression. Le matériau à base de caoutchouc cellulaire 2 utilisé est un mélange de gomme butyl qui présente une excellente étanchéité à l'air et en outre une élasticité de déformation importante; les cellules incluses dans le matériau à base de caoutchouc cellulaire 2 sont, au moins, à 90% des cellules fermées, c'est à dire qu'elles sont isolées les unes des autres.

Par élasticité de déformation suffisante, il faut comprendre que le matériau à base de caoutchouc cellulaire peut présenter de grandes déformations sous l'action d'efforts et reprendre sa géométrie initiale dès lors que ledit matériau n'est plus soumis à ces efforts.

Dans la structure gonflable 1 est prévue une seule cavité 4 formée de quatre branches 5 allongées et délimitée par un contour 6 de longueur 120mm. Chaque branche a environ pour longueur 14mm. La surface de la section transversale de la cavité 4 est de l'ordre de 160mm².

La section transversale de la cavité 4 est approximativement centrée dans la section transversale de la structure gonflable 1 de façon que la distance minimale d existant entre un point quelconque du contour 6 de ladite cavité et un point quelconque du contour extérieur de la structure gonflable 1 est au moins de 16mm à l'état libre non gonflé.

Pour introduire un fluide sous pression dans la cavité 4 afin de gonfler la structure gonflable 1, un trou est prévu dans l'épaisseur de la structure gonflable 1 pour raccorder la cavité 4 à une valve 7 collée sur l'extérieur de ladite structure.

On peut aisément constater que la surface transversale de la cavité 4 à l'état libre non gonflé est très faible et correspond dans le cas présent à environ 1.8% de la section transversale totale de la structure 1.

La figure 2 représente, de façon schématique et vu en coupe transversale, un ensemble monté 12 comportant un pneumatique 10 de dimension **90/90-21** monté sur une jante de montage 11 et comprenant la structure gonflable 1 montrée à la figure 1 et qui a été introduite au cours du montage dudit pneumatique sur ladite jante. Compte tenu du caractère déformable et de l'élasticité de cette structure 1, celle-ci occupe, bien que non gonflée, quasiment tout le volume délimité par le pneumatique et sa jante. Bien entendu, il peut rester un faible pourcentage de ce volume qui n'est pas occupé par la structure 1 sans pour autant que cela nuise au bon fonctionnement de l'invention. Dans cet état non gonflé, l'ensemble monté 12, tel que décrit, peut fonctionner de manière tout à fait satisfaisante puisque la flèche du pneumatique sous une charge est absorbée par l'écrasement du matériau cellulaire 2 et que les risques de déjantage sont sensiblement réduits, la structure 1 maintenant le pneumatique 10 en contact avec sa jante 11.

En mode de fonctionnement gonflé, on introduit dans la cavité 4 un gaz sous pression au moyen d'une valve 7 (non représentée sur cette figure); cette pression s'exerce contre la paroi de la cavité 4 et comprime le matériau caoutchoutique cellulaire 2 contre la paroi interne du pneumatique 1. Sous l'action de cette pression, la section transversale de la cavité change progressivement de forme pour adopter la forme à quatre branches montrée sur la figure 3 à la pression de 0.5 bar.

Cependant, et compte tenu du grand périmètre de la forme à plusieurs branches du contour de la cavité à l'état libre, le changement de forme de ladite cavité s'effectue sans que ledit périmètre ne soit sensiblement modifié et par conséquent sans que se développent d'importantes déformations d'allongement dans le matériau caoutchoutique cellulaire 2 au voisinage de la cavité 4, ce qui est bénéfique du point de vue de la tenue mécanique de la structure gonflable selon l'invention. La paroi de la cavité ne s'allonge qu'à partir d'une valeur de la pression de gonflage d'autant plus élevée que le périmètre moyen de la section transversale de la cavité 4 est grand (si ce périmètre est de l'ordre du périmètre moyen extérieur de la section transversale de la structure gonflable alors la déformation d'allongement sera nulle en moyenne). Plus l'on cherchera à réduire les déformations au voisinage du contour de la cavité qui résultent du gonflage et plus il sera nécessaire d'augmenter le périmètre du contour de la cavité à l'état libre : pour cela, il sera bien entendu nécessaire de réaliser une cavité dont la section transversale présentera un nombre adapté de branches plus ou moins allongées et en règle générale, un nombre de branches d'autant plus grand que l'on veut un périmètre important. Par allongée, on entend qu'une branche présente une grande longueur sans pour autant suivre une forme rectiligne : une forme ondulée peut ainsi permettre d'obtenir une grande longueur tout en restant suffisamment éloignée du contour extérieur de la structure gonflable. Préférentiellement, le périmètre moyen de la section transversale de chaque cavité est supérieur à 50% du périmètre moyen de la section transversale de la structure gonflable et la surface moyenne de la section transversale de chaque cavité est inférieur à 5% de la surface moyenne de la section transversale totale de ladite structure.

La structure gonflable proposée autorise un dimensionnement qui facilite son montage dans le pneumatique car il est en effet possible de prévoir des dimensions hors tout de la structure gonflable selon l'invention non gonflée adaptées aux dimensions internes du pneumatique. Par exemple, il peut être réalisé une structure ayant au moins une cavité, chaque cavité présentant la particularité d'avoir une section transversale qui diminue très fortement entre l'état libre et lorsqu'elle est placée non gonflée dans un pneumatique. De manière avantageuse, il peut être prévu de ne fabriquer qu'un nombre réduit de structures gonflables pour répondre au besoin de toutes les gammes de pneumatiques, chaque structure pouvant s'adapter à plusieurs pneumatiques de dimensions voisines.

De manière connue en soi, il est possible de remplir la cavité avec un gaz qui diffuse à l'intérieur des cellules du matériau constituant la structure gonflable pour recharger celles-ci en pression et compenser une éventuelle perte de pression résultant d'un temps de stockage trop important avant utilisation dans un pneumatique.

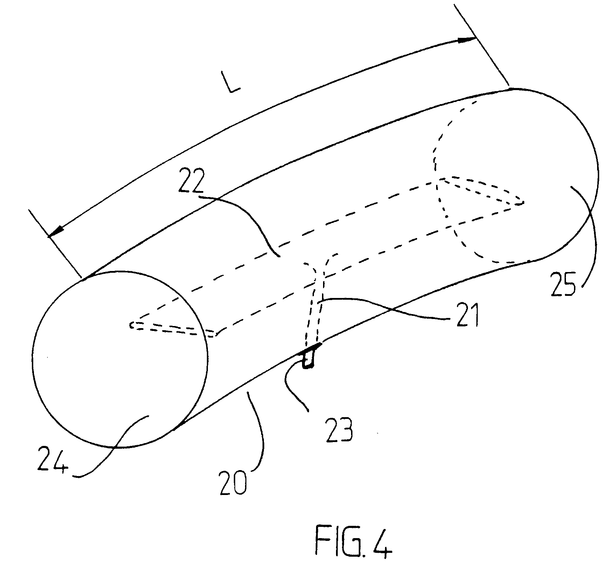

La variante selon l'invention représentée sur la figure 4 selon laquelle la structure gonflable 20 a la forme d'un tube allongé en matériau caoutchoutique cellulaire comportant deux extrémités 24 et 25. Cette structure gonflable 20 est pourvue d'une seule cavité 22 ayant la forme d'une fente qui s'étend sur presque toute la longueur L de ladite structure sauf au voisinage de ses deux extrémités 24 et 25 où ladite cavité 22 est fermée. Une valve 23 est collée sur la surface extérieure de la structure 20 est raccordée, par un trou 21, à la cavité 22 et permet le gonflage de la structure 20 après que celle-ci a été mise en place dans un pneumatique. Cette structure gonflable 20 conforme à l'invention présente l'intérêt de pouvoir être mise en place dans un pneumatique pour véhicule deux roues sans avoir à déposer les roues dudit véhicule. Le choix de la longueur **L** de cette structure est fait en tenant compte des dimensions du pneumatique à équiper, de façon à remplir, à l'état non gonflé au moins 90-95% du volume interne délimité par le pneumatique et sa jante de montage.

Compte tenu de la dimension du pneumatique présenté, il a été décrit une structure gonflable ne comportant qu'une cavité; bien entendu, dans le cas d'un pneumatique de dimension plus grande et en particulier de section transversale plus grande (comme, par exemple, un pneumatique de véhicule de tourisme) il peut être prévu plusieurs cavités disposées côte à côte de façon à permettre un fonctionnement plus homogène de la structure gonflable.

L'emploi d'une structure gonflable conforme à l'invention permet d'obtenir un ensemble monté comportant un pneumatique monté sur une jante de montage et incorporant ladite structure gonflable comportant un passage raccordant l'intérieur de la cavité à un moyen d'amenée d'un fluide de gonflage, cette structure occupant, une fois en place, sensiblement tout le volume délimité par le pneumatique et sa jante. Ainsi constitué, l'ensemble monté peut être utilisé soit gonflé soit non gonflé sans que sa mobilité en soit affectée.

## Revendications

1. Structure gonflable (1, 20), dont une des dimensions est très supérieure aux autres dimensions, destinée à être mise en place à l'intérieur d'un pneumatique monté sur une jante de montage, cette structure gonflable (1, 20) réalisée en matériau à base de caoutchouc cellulaire comportant au moins 90% de cellules fermées et pourvue d'au moins une cavité (4, 22) s'étendant suivant la plus grande dimension de la structure (1, 20) et toute entière positionnée à l'intérieur de ladite structure, chaque cavité (4, 22) étant reliée à des moyens prévus pour réaliser une mise en pression de ladite cavité et par là de la structure gonflable (1, 20), ladite structure étant **caractérisée en ce que**, à l'état libre non gonflé, le périmètre moyen de la section transversale de chaque cavité (4, 22) est au moins égal à 10% du périmètre moyen de la section transversale de la structure gonflable (1, 20) et **en ce que** la surface moyenne de la section transversale de chaque cavité (4, 22) est petite devant la section transversale totale de la structure gonflable (1, 20).

2. Structure gonflable (1, 20) selon la revendication 1 **caractérisée en ce que** la surface moyenne de la section transversale de chaque cavité est au plus égale à **10%** de la surface moyenne de la section transversale totale de ladite structure.

3. Structure gonflable (1, 20) selon la revendication 1 ou la revendication 2 **caractérisée en ce que** le périmètre moyen de la section transversale de chaque cavité (4, 22) est au moins égal à 50% du périmètre moyen de la section transversale de la structure gonflable (1, 20) et **en ce que** la surface moyenne de la section transversale de chaque cavité est au plus égale à 5% de la surface moyenne de la section transversale totale de ladite structure.

4. Structure gonflable (1, 20) selon l'une des revendications 1 à 3 **caractérisée en ce que** la position d'un point quelconque de la structure situé sur le pourtour de chaque cavité (4, 22) non gonflée, est, par rapport au point le plus proche à l'extérieur de ladite structure, à une distance d'au moins 15% de la plus grande des dimensions de la structure gonflable (1, 20) vue en section transversale.

5. Structure gonflable (1, 20) selon l'une des revendications 1 à 4 **caractérisée en ce que** le matériau composant ladite structure est à base de mélange de caoutchouc butyl ayant une étanchéité à l'air très grande et comportant une pluralité de cellules fermées.

6. Structure gonflable (1, 20) selon l'une des revendications 1 à 5 **caractérisée en ce qu'**elle présente, à l'état libre, une forme allongée terminée par deux extrémités, chaque extrémité étant bouchée de façon à fermer la/les cavité(s) interne(s).

7. Structure gonflable (1, 20) selon l'une des revendications 1 à 5 **caractérisée en ce qu'**elle présente, à l'état libre, la forme d'un tore fermé.

8. Structure gonflable (1, 20) selon l'une des revendications 1 à 7 **caractérisée en ce que** la section transversale de chaque cavité (4, 22) présente une forme ayant au moins une branche allongée.

9. Ensemble monté comportant un pneumatique monté sur une jante de montage **caractérisé en ce qu'**il est pourvu d'une structure gonflable (1, 20) conforme à l'une quelconque des revendications 1 à 8 et **en ce que** ladite structure occupe, une fois en place, sensiblement tout le volume délimité par le pneumatique et sa jante, ladite structure gonflable (1, 20) comportant un passage raccordant l'intérieur de chaque cavité à un moyen (7, 23) d'amenée d'un fluide de gonflage pour gonfler ladite cavité.

## Patentansprüche

1. Aufpumpbare Struktur (1, 20), deren eine Dimension viel größer ist als die anderen Dimensionen, und die dazu bestimmt ist, in das Innere eines Reifens eingesetzt zu werden, der auf einer Montagefelge montiert wird, wobei diese aufpumpbare Struktur (1, 20), die aus einem Material auf Zellgummibasis hergestellt ist, mindestens 90% geschlossene Poren aufweist und mit mindestens einem Hohlraum (4, 22) versehen ist, der sich entsprechend der größten Dimension der Struktur (1, 20) erstreckt und in seiner Gesamtheit im Inneren der genannten Struktur angeordnet ist, wobei jeder Hohlraum (4, 22) an Mittel angeschlossen ist, die vorgesehen sind, um eine Druckbeaufschlagung des genannten Hohlraums und hierdurch der aufpumpbaren Struktur durchzuführen, und wobei die genannte Struktur (1, 20) **dadurch gekennzeichnet ist, daß** in nicht-aufgepumptem Zustand der mittlere Umfang des Querschnitts eines jeden Hohlraums (4, 22) mindestens 10% des mittleren Umfangs des Querschnitts der aufpumpbaren Struktur (1, 20) beträgt, und daß die mittlere Fläche des Querschnitts eines jeden Hohlraums (4, 22) klein ist gegenüber dem Gesamtquerschnitt der aufpumpbaren Struktur (1,20).

2. Aufpumpbare Struktur (1, 20) nach Anspruch 1, **dadurch gekennzeichnet, daß** die mittlere Fläche des Querschnitts eines jeden Hohlraums höchstens gleich ist 10% der mittleren Fläche des Gesamtquerschnitts der genannten Struktur.

3. Aufpumpbare Struktur (1, 20) nach Anspruch 1 oder Anspruch 2, **dadurch gekennzeichnet, daß** der mittlere Umfang des Querschnitts eines jeden Hohlraums (4, 22) mindestens gleich ist 50% des mittleren Umfangs des Querschnitts der aufpumpbaren Struktur (1, 20), und daß die mittlere Fläche des Querschnitts eines jeden Hohlraums höchstens 5% der mittleren Fläche des gesamten Querschnitts der genannten Struktur beträgt.

4. Aufpumpbare Struktur (1, 20) nach einem der Ansprüche 1 bis 3, **dadurch gekennzeichnet, daß** die Position irgendeines Punktes der Struktur, gelegen auf der Kontur eines nicht aufgepumpten Hohlraums (4, 22), sich, in Bezug auf den nächstgelegenen Punkt der Außenseite der genannten Struktur, unter einem Abstand von mindestens 15% der größten Dimension der aufpumpbaren Struktur (1, 20) befindet, im Querschnitt gesehen.

5. Aufpumpbare Struktur (1, 20) nach einem der Ansprüche 1 bis 4, **dadurch gekennzeichnet, daß** das Material, aus dem die genannte Struktur zusammengesetzt ist, auf der Basis einer Butylgummimischung beruht, die eine sehr hohe Luftdichtigkeit hat und eine Vielzahl geschlossener Poren aufweist.

6. Aufpumpbare Struktur (1, 20) nach einem der Ansprüche 1 bis 5, **dadurch gekennzeichnet, daß** sie in freiem Zustand eine längliche Form hat, die durch zwei Enden abgeschlossen wird, und daß jedes Ende derart verschlossen ist, daß der oder die innere(n) Hohlraum bzw. Hohlräume geschlossen weren.

7. Aufpumpbare Struktur (1, 20) nach einem der Ansprüche 1 bis 5, **dadurch gekennzeichnet, daß** sie in freiem Zustand die Form eines geschlossenen Kreisrings aufweist.

8. Aufpumpbare Struktur (1, 20) nach einem der Ansprüche 1 bis 7, **dadurch gekennzeichnet, daß** der Querschnitt eines jeden Hohlraums (4, 22) eine Form aufweist, die mindestens einen länglichen Schenkel hat.

9. Montierte Baugruppe mit einem Reifen, der auf einer Montagefelge montiert ist, **dadurch gekennzeichnet, daß** sie mit einer aufpumpbaren Struktur (1, 20) nach irgendeinem der Ansprüche 1 bis 8 versehen ist, und daß daß die genannte Struktur, wenn sie sich erst einmal an ihrem Platz befindet, im wesentlichen das gesamte Volumen einnimmt, das vom Reifen und seiner Felge eingenommen wird, wobei die genannte, aufpumpbare Struktur (1, 20) einen Kanal aufweist, der das Innere eines jeden Hohlraums mit einem Mittel bzw. einer Einrichtung (7, 23) zur Einleitung eines Aufpump-Strömungsmittels aufweist, um den genannten Hohlraum aufzupumpen.

## Claims

1. An inflatable structure (1, 20), one of the dimensions of which is very much greater than the other dimensions, which is intended to be placed inside a tyre mounted on a mounting rim, this inflatable structure (1, 20) made of material based on cellular rubber comprising at least 90% of closed cells and being provided with at least one cavity (4, 22) which extends over the greatest dimension of the structure (1, 20) and positioned in its entirety within said structure, each cavity (4, 22) being connected to means provided to permit pressurisation of said cavity and hence of the inflatable structure (1, 20), said structure being **characterised in that**, in the non-inflated state, the average perimeter of the cross-section of each cavity (4, 22) is at least equal to 10% of the average perimeter of the cross-section of the inflatable structure (1, 20) and **in that** the average surface area of the cross-section of each cavity (4, 22) is small compared with the total cross-section of the inflatable structure (1, 20).

2. An inflatable structure (1, 20) according to Claim 1, **characterised in that** the average surface area of the cross-section of each cavity is at most equal to 10% of the average surface area of the total cross-section of said structure.

3. An inflatable structure (1, 20) according to Claim 1 or Claim 2, **characterised in that** the average perimeter of the cross-section of each cavity (4, 22) is at least equal to 50% of the average perimeter of the cross-section of the inflatable structure (1, 20), and **in that** the average surface area of the cross-section of each cavity is at most equal to 5% of the average surface area of the total cross-section of said structure.

4. An inflatable structure (1, 20) according to one of Claims 1 to 3, **characterised in that** the position of any point of the structure which is located on the periphery of each non-inflated cavity (4, 22), relative to the closest point to the outside of said structure, is at a distance of at least 15% of the largest of the dimensions of the inflatable structure (1, 20), viewed in cross-section.

5. An inflatable structure (1, 20) according to one of Claims 1 to 4, **characterised in that** the material constituting said structure is based on a butyl rubber mixture having very great air-tightness and comprising a plurality of closed cells.

6. An inflatable structure (1, 20) according to one of Claims 1 to 5, **characterised in that**, in the free state, it has an elongated shape ending in two ends, each end being blocked so as to close off the inner cavity (cavities).

7. An inflatable structure (1, 20) according to one of Claims 1 to 5, **characterised in that**, in the free state, it is in the form of a closed torus.

8. An inflatable structure (1, 20) according to one of Claims 1 to 7, **characterised in that** the cross-section of each cavity (4, 22) is in a form having at least one elongated branch.

9. A mounted assembly comprising a tyre mounted on a mounting rim, **characterised in that** it is provided with an inflatable structure (1, 20) according to any one of Claims 1 to 8 and **in that** said structure, once in place, occupies substantially the entire volume defined by the tyre and its rim, said inflatable structure (1, 20) comprising a passage connecting the interior of each cavity to a supply means (7, 23) for an inflation fluid for inflating said cavity.
